# EUROPÄISCHE PATENTSCHRIFT

(11) **EP 2 960 967 B1**
(45) Veröffentlichungstag und Bekanntmachung des Hinweises auf die Patenterteilung: **02.11.2016**
(21) Anmeldenummer: 14173820.3
(22) Anmeldetag: 25.06.2014
(51) Int. Cl.: H01M 2/14, H01M 2/16, H01M 10/26

(54) **Verfahren zur Herstellung eines Elektroden-Festelektrolyt-Verbundes**
Method for producing a fixed electrode-solid electrolyte composite
Procédé de fabrication d'un composite électrodes-électrolyte solide

(43) Veröffentlichungstag der Anmeldung: 30.12.2015
(73) Patentinhaber: VARTA Microbattery GmbH, 73479 Ellwangen (DE)
(72) Erfinder: Krebs, Martin, 73494 Rosenberg (DE); Wendler, Michael, 73765 Neuhausen (DE)
(74) Vertreter: Patentanwaltskanzlei Cartagena

(56) Entgegenhaltungen:
- US-A1- 2003 044 686
- US-A1- 2004 229 116

## Beschreibung

Die vorliegende Erfindung betrifft ein Verfahren zur Herstellung eines Elektroden-Festelektrolyt-Verbundes.

Der Begriff "Batterie" meinte ursprünglich mehrere in Serie oder parallel geschaltete elektrochemische Zellen. Heute werden jedoch sehr häufig auch unter einzelnen elektrochemischen Zellen (Einzelzellen) Batterien verstanden. Dies wird auch im Rahmen der vorliegenden Anmeldung so gehandhabt.

Bei der Entladung einer elektrochemischen Zelle findet eine energieliefernde chemische Reaktion statt, welche sich aus zwei elektrisch miteinander gekoppelten aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden Ionenstrom innerhalb der Zelle. Dieser Ionenstrom wird durch einen ionenleitenden Elektrolyten gewährleistet.

In sekundären Zellen und Batterien ist diese Entladereaktion reversibel, es besteht also die Möglichkeit, die bei der Entladung erfolgte Umwandlung chemischer Energie in elektrische umzukehren.

Als ionenleitende Elektrolyte kommen häufig flüssige Elektrolyte aus einem Lösungsmittel und darin gelösten Ionen zum Einsatz. Unterschieden wird dabei in der Regel zwischen wässrigen Batterien, die Wasser als Lösungsmittel aufweisen, und nicht-wässrigen Batterien, welche ein organisches Lösungsmittel enthalten. Während die Elektrolyte von wässrigen Batterien meist Hydroxid-Ionen enthalten, umfasst der Elektrolyt von nicht-wässrigen Batterien in der Regel ein gelöstes fluoriertes Salz wie Lithiumhexafluorophosphat. Typische Vertreter wässriger Batterien sind Alkali-, Nickel/Cadmium-, Zink/Braunstein-, Nickel/Zink- und Nickel/Metallhydrid-Batterien. Vertreter mit nicht-wässrigen Elektrolyt-Systemen sind insbesondere Lithium-Ionen-Batterien. Sowohl nicht-wässrige als auch wässrige Batterien weisen zwischen den Elektroden einen Separator auf, dem die Aufgabe zukommt, einen unmittelbaren Kontakt zwischen entgegengesetzt gepolten Elektroden zu verhindern. Die Elektroden und der Separator sind meist mit einem flüssigen Elektrolyten getränkt. Damit es zu einer Ionenwanderung zwischen den Elektroden kommen kann, sollten Separatoren porös ausgebildet sein.

Zunehmend sind auch Batterien von Bedeutung, die als Separator einen sogenannten Festelektrolyten aufweisen. Bei einem Festelektrolyten handelt es sich um einen elektrisch isolierenden Festkörper, dessen Ionenleitfähigkeit wesentlich größer ist als seine elektrische Leitfähigkeit. Festelektrolyten kommt die Aufgabe zu, entgegengesetzt gepolte Elektroden räumlich voneinander zu trennen, zwischen den Elektroden aber gleichzeitig eine ionenleitende Verbindung herzustellen.

Festelektrolyte können polykristalline Keramiken, kristallin erstarrte Schmelzen, Gläser und kristalline oder amorphe Filme sein. Insbesondere im Zusammenhang mit Batterien sind aber auch Festelektrolyte aus ionenleitenden Polymeren aus dem Stand der Technik bekannt. Beispielsweise beschreiben US 6,858,670 B2 und US 2003/0139527 A1 Festelektrolyte für alkalische Batterien auf Basis von Polyvinylalkohol (PVA). Problematisch ist bei der Verwendung derartiger Elektroden-Separator-Verbünde, dass die Anbindung der Festelektrolyt-Schicht an die jeweilige Elektrode in vielen Fällen unzuverlässig ist, wodurch sich der Innenwiderstand der Batterie, die den betroffenen Elektroden-Separator-Verbund enthält, deutlich erhöhen kann.

Der vorliegenden Erfindung lag die Aufgabe zugrunde, Batterien bereitzustellen, die einen Elektroden-Festelektrolyt-Verbund aufweisen, bei dem die Anbindung zwischen Elektroden und dem Festelektrolyten verbessert ist.

Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 und 3 angegeben.

Der Wortlaut sämtlicher Ansprüche wird hiermit durch Bezugnahme zum Inhalt dieser Beschreibung gemacht.

Das erfindungsgemäße Verfahren dient der Herstellung eines Elektroden-Festelektrolyt-Verbunds. Der Verbund weist mindestens eine Elektrode und mindestens einen mit der Elektrode verbundenen Festelektrolyten auf.

Das Verfahren umfasst insbesondere die folgenden Schritte:
(1) Bereitstellen einer Elektrode
   Bei der bereitgestellten Elektrode handelt es sich vorzugsweise um eine Elektrode in Form einer dünnen Schicht, beispielsweise mit einer Dicke im Bereich zwischen 10 µm und 5 mm, bevorzugt zwischen 50 µm und 1 mm, sowie einer bevorzugten flächigen Ausdehnung von wenigen Quadratmillimetern bis zu einigen Quadratmetern, bevorzugt zwischen 1 mm² und 1 dm².
   Gegebenenfalls ist die Elektrode auf einem Substrat aufgebracht, beispielsweise auf einen folien-, netz- oder gitterförmigen metallischen Stromableiter.
(2) Bildung einer Festelektrolyt-Schicht auf einer Oberfläche der Elektrode
   Dieser Schritt umfasst erfindungsgemäß mehrere Teilschritte. Es wird nämlich
   - zunächst die Oberfläche alkalisiert durch Aufbringen einer alkalischen Lösung auf die Oberfläche und
   - dann auf die alkalisierte Oberfläche mindestens ein Polymer aufgebracht, das hydrolisierbare Gruppen aufweist und dessen Fähigkeit zur Ausbildung eines dreidimensionalen, hochviskosen Netzwerks bei einer mindestens teilweisen Hydrolyse dieser Gruppen ansteigt.

Überraschenderweise hat sich herausgestellt, dass sich mit dem erfindungsgemäßen Verfahren Elektroden-Festelektrolyt-Verbünde herstellen lassen, die eine unerwartet hohe Strombelastbarkeit aufweisen und bei denen eine besonders feste Bindung zwischen der Elektrode und dem Festelektrolyten besteht.

Bei dem mindestens einen Polymer handelt es sich um ein Mitglied aus der Gruppe mit Polyvinylalkohol (PVA), Ethylen-Vinylalkohol-Copolymer (EVA), Polyvinylpyrrolidon (PVP), Polyacrylat (PA) und Polyacrylnitril (PAN). Jede dieser Polymerverbindungen kann einzeln oder in Kombination mit einer oder mehreren der anderen Polymerverbindungen eingesetzt werden. Besonders bevorzugt kommt vorliegend PVA als das mindestens eine Polymer zum Einsatz. Es können aber auch Kombinationen der genannten Polymere zum Einsatz kommen, beispielsweise PVP und PA.

Bei PVA handelt es sich bekanntlich um ein Copolymer mit Vinylalkohol- und VinylacetatEinheiten. Es lässt sich insbesondere durch sein Molekulargewicht und seinen Hydrolysegrad charakterisieren. Vorliegend ist vor allem Letzterer von Bedeutung. Bevorzugt kommt im Rahmen der vorliegenden Erfindung PVA mit einem Hydrolysegrad zwischen 70 und 99,9 Mol-%, bevorzugt zwischen 75 und 95 Mol-%, besonders bevorzugt zwischen 75 und 90 Mol-%, zum Einsatz. Handelsübliches PVA mit solchen Hydrolysegraden weist in der Regel ein mittleres Molekulargewicht zwischen 10.000 und 250.000 g/mol, bevorzugt zwischen 20.000 und 150.000 g/mol, insbesondere zwischen 50.000 und 100.000 g/mol, auf.

Bei EVA handelt es sich bekanntlich um ein Copolymer aus Ethylen, Vinylalkohol und Vinylacetat. Analog zu PVA kann es durch sein Molekulargewicht und seinen Hydrolysegrad charakterisiert werden. Die Herstellung erfolgt durch Verseifung von Ethylen-Vinylacetat-Copolymeren. Bedingt durch seinen Ethylen-Anteil gibt es sowohl wasserunlösliches als auch wasserlösliches EVA. Bevorzugt wird vorliegend wasserlösliches EVA verwendet. Besonders bevorzugt kommt EVA mit einem niedrigen Ethylenanteil von nicht mehr als 15 Mol-% zum Einsatz. Der Hydrolysegrad von einsetzbarem EVA liegt bevorzugt zwischen 70 und 99,9 Mol-%, bevorzugt zwischen 75 und 95 Mol-%, besonders bevorzugt zwischen 75 und 90 Mol-%.

Unter alkalischen Bedingungen kommt es bei PVA und EVA zu einer Hydrolyse noch nicht verseifter Vinylacetateinheiten. Dadurch kann ein verstärkter Gelierungseffekt auftreten, PVA und EVA vernetzen stärker und bilden das erwähnte dreidimensionale, hochviskose Netzwerk aus. Day gemäß der vorliegenden Erfindung zunächst eine alkalische Lösung auf die Oberfläche einer Elektrode aufgebracht wird, auf die anschließend das mindestens eine, hydrolisierbare Gruppen aufweisende Polymer aufgebracht wird, kommt es an dieser Oberfläche sehr schnell zu einer Vernetzung und, was den Vernetzungsgrad innerhalb des entstehenden Elektroden-Festelektrolyt-Verbundes angeht, zu einem zumindest temporären Gefälle. Die der bereitgestellten Elektrode abgewandte Seite des aufgetragenen Festelektrolyten vernetzt in aller Regel deutlich langsamer als die mit der Elektrode in unmittelbarem Kontakt stehende Seite.

Ein ähnliches Verhalten wie PVA und EVA zeigt auch PVP. Bei PVP handelt es sich bekanntlich um ein wasserlösliches Polymer. Handelsübliche PVP-Varianten weisen in der Regel Molekülmassen im Bereich zwischen 2500 und 2500000 g/mol auf. Im Grunde sind alle handelsüblichen PVP-Varianten im Rahmen der vorliegenden Erfindung einsetzbar. Unter alkalischen Bedingungen kann PVP weiter vernetzen unter Bildung eines wasserunlöslichen Produkts. Bei der Hydrolyse von PVP in wässriger alkalischer Lösung erfolgt neben einer geringfügigen Bildung von Poly-N-Vinyl-γ-Aminobuttersäure-Einheiten eine Abspaltung von γ-Aminobuttersäure und Acetaldehyd. Vermutlich ist der gebildete Acetaldehyd für die erwähnte Vernetzung verantwortlich. Als Hydrolyseprodukt erhält man weitgehend hydrolisierte Produkte, die bis zu zwei Drittel ihres Gewichts Poly-N-Vinyl-γ-Aminobuttersäure-Einheiten enthalten.

Bei PA handelt es sich bekanntlich um ein Polymer auf Basis von Estern der Acrylsäure, die in der Regel durch radikalische Polymerisation zugänglich sind. Besonders geeignet sind erfindungsgemäß Acrylat-Alkylacrylat-Copolymere, die sich vorteilhafterweise durch die folgende Struktur auszeichnen können:

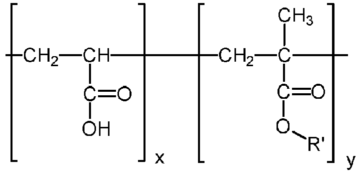

Hierbei sind R' ein Alkylrest und x und y ganze Zahlen, welche den jeweiligen stöchiometrischen Anteil der jeweiligen Comonomere symbolisieren.

Analog zu den bereits genannten Polymeren kann es bei PA, insbesondere bei PA der genannten Struktur, unter Einwirkung von Alkaliverbindungen zu einer Hydrolysereaktion kommen, die wiederum eine stärkere Gelierung/Vernetzung zur Folge haben kann.

Handelsübliches wasserlösliches PA hat in der Regel eine mittlere Molmasse zwischen 2.000 und 20.000 g/mol. Solches PA ist für eine Verwendung im Rahmen der vorliegenden Erfindung gut geeignet.

Als PAN sind besonders geeignet PAN-Emulsionen, wie sie beispielsweise gemäß der EP-A-590460 erhalten werden können. Bei der Hydrolyse solcher PAN-Emulsionen mit wässrigen Lösungen von Alkalihydroxiden entstehen teilhydrolisierte Homo- und/oder Copolymerisate von Acrylnitril, wobei in der Regel 30 bis 80 Mol-% der Nitrilgruppen in Carboxylatgruppen und 20 bis 70 % der Nitrilgruppen in Carbonamidgruppen umgewandelt werden und 0 bis 20 Mol-% der Nitrilgruppen unverändert bleiben. Mit beginnender Hydrolyse gehen die PAN-Emulsionen in einen hochviskosen, gequollenen Zustand über.

Die das mindestens ein Polymer umfassende Zusammensetzung ist insbesondere eine Emulsion, Dispersion oder Lösung. Die Zusammensetzung umfasst die folgenden Komponenten:
- ein Lösungs- oder Dispergiermittel, vorzugsweise in einem Anteil zwischen 15 Gew.-% und 95 Gew.-%, insbesondere in einem Anteil zwischen 30 Gew.-% und 95 Gew.-%,
- das mindestens eine Polymer, vorzugsweise in einem Anteil zwischen 5 Gew.-% und 30 Gew.-%, insbesondere in einem Anteil zwischen 5 Gew.-% und 15 Gew.-%,
- 0 bis 5 Gew.-% Additive und
- 0 bis 50 Gew.-% Füllstoffe.

Die prozentualen Anteile der genannten Bestandteile summieren sich bevorzugt auf 100 Gew.-% auf, gegebenenfalls unter Berücksichtigung weiterer fakultativer Komponenten.

Als Lösungs- oder Dispergiermittel kommt bevorzugt Wasser oder ein Alkohol oder ein Alkohol-Wasser-Gemisch zum Einsatz. Es kommen jedoch auch einige organische Lösungsmittel in Frage. Beispielhaft erwähnt seien Aceton oder N-Methylpyrrolidon.

Die Zusammensetzung weist bevorzugt einen pH-Wert auf, der niedriger ist als der pH-Wert der erfindungsgemäß zum Einsatz kommenden alkalischen Lösung. Besonders bevorzugt ist die Zusammensetzung nicht alkalisch, weist also einen pH-Wert von 7 oder kleiner auf.

Die alkalische Lösung enthält die folgenden Komponenten:
- ein Lösungs- oder Dispergiermittel, vorzugsweise in einem Anteil zwischen 50 Gew.-% und 95 Gew.-%, insbesondere in einem Anteil zwischen 55 Gew.-% und 80 Gew.-%,
- mindestens eine Alkaliverbindung, vorzugsweise in einem Anteil zwischen 5 Gew.-% und 45 Gew.-%, insbesondere in einem Anteil zwischen 20 Gew.-% und 40 Gew.-%, und
- 0 bis 5 Gew.-% Additive.

Die prozentualen Anteile der genannten Bestandteile summieren sich bevorzugt auch hier auf 100 Gew.-% auf, gegebenenfalls unter Berücksichtigung weiterer fakultativer Komponenten.

Als Alkaliverbindung kommen bevorzugt Natriumhydroxid oder Kaliumhydroxid zum Einsatz. Es ist aber auch der Einsatz von Erdalkalihydroxiden oder anderen Hydroxidverbindungen wie Ammoniumhydroxid denkbar.

Als Füllstoffe können die Zusammensetzung und die alkalische Lösung insbesondere Partikel und/oder Fasern enthalten, die in Wasser oder einer wässrigen Lösung bei Raumtemperatur unlöslich sind. Beispiele für derartige Füllstoffe finden sich in der WO 2011/131627 A1. In dieser sind Partikel und Fasern beschrieben, die sich im Rahmen der vorliegenden Erfindung hervorragend als Füllstoffe eignen. Die Partikel und/oder Fasern in der Druckpaste sollten elektrisch nicht leitend sowie unlöslich sein, insbesondere in Wasser. Besonders bevorzugt bestehen die Partikel und/oder Fasern aus einem keramischen Material, einem in Wasser nahezu oder vollständig unlöslichen Salz (wie insbesondere Calciumcarbonat), Glas, Basalt oder Kohlenstoff. Der Begriff "keramisches Material" soll dabei sämtliche Feststoffe umfassen, die zur Herstellung keramischer Produkte dienen können, darunter silikatische Materialien wie Aluminiumsilikate, Gläser und Tonmineralien, oxidische Rohstoffe wie Titandioxid und Aluminiumoxid sowie nichtoxidische Materialien wie Siliziumcarbid oder Siliziumnitrid. Weiterhin gut einsetzbar sind beispielsweise Fasern aus synthetischen Polymeren wie z.B. Polyamidfasern oder Polypropylenfasern oder Fasern aus Fasern aus Kohlenstoff oder Zellulosefasern.

Als Additive kommen für die Zusammensetzung und die alkalische Lösung insbesondere solche Additive in Frage, die dazu geeignet sind, die Verarbeitungseigenschaften der Zusammensetzung und der alkalischen Lösung zu beeinflussen. Zu erwähnen sind in diesem Zusammenhang beispielsweise Rheologiehilfsmittel, mit denen die Viskosität der Zusammensetzung und der alkalischen Lösung angepasst werden kann. Weiterhin können auch Additive verwendet werden, die die mechanischen und/oder chemischen Eigenschaften der entstehenden Festelektrolyt-Schicht beeinflussen können. Beispielhaft hierfür sind Styrol-Butadien-Kautschuk (SBR), ein Polymerisat aus Styrol und Butadien-(1,3), oder modifiziertes SBR zu nennen. Unter modifizierten SBR ist hierbei SBR zu verstehen, das Monomereinheiten enthält, die eine oder mehrere funktionelle Gruppen wie beispielsweise Carboxyl-, Carbonsäureanhydrid-, Nitril-, Hydroxyl-, Mercapto-, Acetat-, Ether-, Ester-, Amid- und/oder Halogen-Gruppen aufweisen.

Vorzugsweise wird im Rahmen der vorliegenden Erfindung SBR oder modifizierter SBR eingesetzt, welcher eine Glasübergangstemperatur im Bereich zwischen minus 30 °C und 0 °C, bevorzugt zwischen minus 15 °C und 0 °C, insbesondere zwischen minus 10 °C und 0 °C, aufweist.

Die mittlere Partikelgröße des verwendeten SBR oder des modifizierten SBR beträgt vorzugsweise zwischen 20 und 500 nm, insbesondere zwischen 100 und 300 nm.

Das SBR verleiht der gebildeten Festelektrolyt-Schicht eine gewisse mechanische Flexibilität, so dass der hergestellte Elektroden-Festelektrolyt-Verbund beispielsweise auch zu einem Elektrodenwickel verarbeitet werden kann.

Weitere Additive zur Verbesserung der mechanischen Eigenschaften und/oder der Flexibilität des Festelektrolyten sind beispielsweise nanoskalige Oxide wie beispielsweise Aluminiumoxid oder Siliziumdioxid.

In einer besonders bevorzugten Ausführungsform enthält die alkalische Lösung - wie die beschriebene Zusammensetzung - ebenfalls mindestens ein Polymer, das hydrolisierbare Gruppen aufweist und dessen Fähigkeit zur Ausbildung eines dreidimensionalen, hochviskosen Netzwerks bei einer mindestens teilweisen Hydrolyse dieser Gruppen ansteigt. Es kommen hierfür die gleichen Polymere in Frage, die oben bereits im Zusammenhang mit der erfindungsgemäß zum Einsatz kommenden Zusammensetzung erwähnt wurden. Allerdings sind diese in der alkalischen Lösung in deutlich geringerer Konzentration enthalten als in der oben beschriebenen Zusammensetzung. Entsprechend weist die alkalische Lösung bevorzugt auch einen größeren Anteil an Lösungs- und/oder Dispergiermittel auf.

Bevorzugt enthält die alkalische Lösung einen Anteil von maximal 5 Gew.-%, insbesondere zwischen 0,5 und 2,5 Gew.-%, an dem mindestens einen Polymer.

Besonders bevorzugt enthalten die alkalische Lösung und die Zusammensetzung jeweils das gleiche Polymer oder die gleiche Polymerkombination, mit der Auflage, dass die Konzentration des Polymers oder der Polymerkombination in der alkalischen Lösung geringer ist als in der Zusammensetzung.

Unter Berücksichtigung des mindestens einen Polymers enthält die alkalische Lösung die folgenden Komponenten:
- ein Lösungs- oder Dispergiermittel, vorzugsweise in einem Anteil zwischen 54,9 Gew.-% und 94,9 Gew.-%, insbesondere in einem Anteil zwischen 52,5 Gew.-% und 74,5 Gew.-%,
- mindestens eine Alkaliverbindung, vorzugsweise in einem Anteil zwischen 5 Gew.-% und 45 Gew.-%, insbesondere in einem Anteil zwischen 20 Gew.-% und 40 Gew.-%,
- 0,1 bis 5 Gew.-%, insbesondere zwischen 0,5 und 2,5 Gew.-%, an dem mindestens einen Polymer und
- 0 bis 5 Gew.-% Additive.

Die prozentualen Anteile der genannten Bestandteile summieren sich bevorzugt auch hier auf 100 Gew.-% auf, gegebenenfalls unter Berücksichtigung weiterer fakultativer Komponenten.

An dieser Stelle sei erwähnt, dass sich alle obigen Angaben zu Gewichtsprozenten jeweils auf die Gesamtmasse der Zusammensetzung und/oder alkalischen Lösung beziehen, das heißt auf die Summe aus der Masse des Lösungs- und/oder Dispergiermittels sowie der Massen der weiteren Komponenten (des mindestens einen Polymers und/oder der mindestens einen Alkaliverbindung und/oder der Füllstoffe und/oder der Additive).

Bevorzugt erfolgt der Auftrag der alkalischen Lösung und/oder des mindestens einen Polymers mittels einer Druckvorrichtung, insbesondere einer Siebdruckvorrichtung. Beim Siebdruck handelt es sich bekanntlich um ein Druckverfahren, bei dem Zusammensetzungen meist pastöser Konsistenz mittels eines Rakels durch ein feinmaschiges Gewebe (das sogenannte Sieb) auf das zu druckende Material gepresst werden. An denjenigen Stellen des Gewebes, an denen dem Druckbild entsprechend nichts aufgedruckt werden soll, werden die Maschenöffnungen des Gewebes durch eine Schablone farbundurchlässig gemacht. An den übrigen Stellen durchdringt die Mischung oder Paste die Maschenöffnungen.

Besonders bevorzugt erfolgt das Aufbringen der Zusammensetzung und/oder der alkalischen Lösung durch ein Heiß-Siebdruckverfahren. Bei diesem Verfahren wird das erwähnte feinmaschige Gewebe erwärmt, beispielsweise auf eine Temperatur > 100 °C. Mittels dieses Verfahrens können auch bei Raumtemperatur hochviskose oder feste Materialien mittels Siebdruck aufgetragen werden, sofern die Temperatur des feinmaschigen Gewebes (des Siebs) der Schmelztemperatur bzw. Glasübergangstemperatur des zu verarbeitenden Materials entspricht oder diese übersteigt.

Grundsätzlich können auch andere Drucktechniken angewandt werden. Geeignete Druckverfahren sind dem Fachmann bekannt. Beispielhaft zu nennen sind Inkjet- und Bubblejet-Printing.

Selbstverständlich kann das Aufbringen der Zusammensetzung und/oder der alkalischen Lösung auch durch weitere bekannte Verfahren wie beispielsweise durch Gießen, Spritzen, Rakeln, Spincoating oder "Solution Casting" erfolgen.

Der Auftrag der alkalischen Lösung und/oder des mindestens einen Polymers kann grundsätzlich bei Raumtemperatur erfolgen. Bevorzugt ist es allerdings, wenn der Aufdruck bei erhöhten Temperaturen, insbesondere bei Temperaturen zwischen 100 und 200 °C, erfolgt. In diesen Fällen kommt besonders bevorzugt das erwähnte Heiß-Siebdruckverfahren zur Anwendung.

In bevorzugten Ausführungsformen wird die Elektrode, auf der die Festelektrolyt-Schicht gebildet wird, ebenfalls mittels einer Druckvorrichtung hergestellt. Weiterhin kann natürlich auch auf die gebildete Festelektrolyt-Schicht in einem Folgeschritt eine weitere Elektrode aufgedruckt werden. So lassen sich problemlos Verbünde mit einer Schichtsequenz positive Elektrode / Festelektrolyt / negative Elektrode bilden.

Gleichermaßen ist es natürlich aber auch möglich, den mittels des erfindungsgemäßen Verfahrens hergestellten Elektroden-Festelektrolyt-Verbund mit einer bereits vorgefertigten Elektrode oder einem weiteren Elektroden-Festelektrolyt-Verbund zu kombinieren, beispielsweise durch Lamination oder durch Verklebung.

In einigen bevorzugten Ausführungsformen wird die Elektrode in Form von Bändern und/oder Bahnen bereitgestellt und in einem Durchlaufverfahren mit der Zusammensetzung und der alkalischen Lösung beschichtet. Man erhält so einen band- oder bahnförmigen Elektroden-Festelektrolyt-Verbund, der direkt weiterverarbeitet oder beispielsweise aufgerollt oder aufgewickelt zwischengelagert werden kann. Wenn der Elektroden-Festelektrolyt-Verbund direkt in oder zu einer Zelle verbaut werden soll, so können aus dem band- oder bahnförmigen Verbund Bereiche oder Abschnitte mit der benötigten Geometrie (beispielsweise oval oder kreisförmig für Knopfzellen) gestanzt oder geschnitten werden. Natürlich kann der Verbund aber, wie bereits erwähnt, zunächst auch um eine oder mehrere weitere Funktionsschichten, beispielsweise eine weitere Elektrodenschicht, erweitert werden.

Klassische Verfahren setzen bislang darauf, Festelektrolytschichten in einem Arbeitsgang herzustellen, nämlich durch Auftrag einer Zusammensetzung, die neben einem Leitsalz und/oder Alkalihydroxid einen Binder, insbesondere Polyvinlyalkohol, enthält. Eine solche Vorgehensweise ist beispielsweise in der DE 10 2011 106 036 A1 beschrieben. Hierbei entstehen homogene Festelektrolyt-Schichten.

Im Gegensatz hierzu entstehen gemäß dem vorliegenden Verfahren zumindest als Zwischenprodukt Elektroden-Festelektrolyt-Verbünde, bei denen das mindestens eine Polymer einen Vernetzungsgrad aufweist, der mit steigendem Abstand von der Oberfläche der Elektrode kleiner wird. Dies liegt darin begründet, dass das mindestens eine Polymer, sobald es in Kontakt mit der alkalisierten Oberfläche tritt, im Kontaktbereich mit der Oberfläche einer alkalischen Hydrolysereaktion unterliegt. Dadurch bedingt kommt es im Kontaktbereich zu einer verstärkten Ausbildung des erwähnten dreidimensionalen, hochviskosen Netzwerks. Mit steigendem Abstand von der Oberfläche nimmt dieser Effekt ab.

Insbesondere in den Ausführungsformen des erfindungsgemäßen Verfahrens, bei denen die alkalische Zusammensetzung das mindestens eine Polymer aufweist, entsteht ein Elektroden-Festelektrolyt-Verbund mit besonders guter Haftung zwischen Elektrode und Festelektrolyt. Die Elektrode ist in aller Regel porös, so dass die alkalische Lösung mitsamt dem enthaltenen Polymer tief in die Elektrode eindringen kann. Das Polymer kann bei der anschließenden Bildung der Festelektrolytschicht mit dem dabei zum Einsatz kommenden Polymer vernetzen.

Der bei diesen Vorgängen gebildete Elektroden-Festelektrolyt-Verbund zeichnet sich dadurch aus, dass sowohl die Elektrode als auch der Festelektrolyt das mindestens eine Polymer enthalten, der Anteil des mindestens einen Polymers in der Elektrode jedoch geringer ist als in der Festelektrolyt-Schicht.

Auch jede Batterie, die einen gemäß dem erfindungsgemäßen Verfahren hergestellten Elektroden-Festelektrolyt-Verbund enthält, ist Gegenstand der vorliegenden Erfindung.

Weitere Merkmale und Vorteile der beschriebenen Erfindung ergeben sich aus der nachfolgenden Beschreibung bevorzugter Ausführungsformen in Verbindung mit den Unteransprüchen. Hierbei können Merkmale der Erfindung jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Beispiel

Herstellung einer bevorzugten Ausführungsform eines erfindungsgemäßen Elektroden-Festelektrolyt-Verbunds nach dem erfindungsgemäßen Verfahren.
(1) Zwei Gewichtsteile PVA (M = 72.000 g/mol, Merck KG, Darmstadt) wurden in einem Reaktionsgefäß vorgelegt und unter Rühren mit 98 Gewichtsteilen hochreinem Wasser vermischt. Die Mischung wurde langsam auf 90 °C erhitzt, bis sich das gesamte PVA gelöst hatte und eine homogene Reaktionsmischung vorlag. Zu dieser Mischung wurden 100 Teile einer konzentrierten Kaliumhydroxidlösung (44,4 Gewichtsteile Kaliumhydroxid und 55,6 Gewichtsteile Wasser) langsam unter Rühren zugegeben. Die Reaktionsmischung wurde anschließend für weitere 10 Minuten bei 90 °C gerührt.
   Mit der so erhaltenen Lösung wurde eine Oberfläche einer bandförmigen, gemäß der DE 37 22 019 A1 hergestellten Luftkathode bestrichen und somit alkalisiert. Die mit der Lösung bestrichene Elektrode wurde getrocknet.
(2) Anschließend wurden 90 Gewichtsteile hochreines Wasser und 10 Gewichtsteile PVA (M = 72.000 g/Mol, Merck KG, Darmstadt) in ein Reaktionsgefäß eingewogen und unter Rühren in einem Wasserbad langsam auf 90°C erhitzt, bis sich das gesamte PVA gelöst hatte und eine homogene Reaktionsmischung vorlag. Zu dieser Mischung wurden zwei Gewichtsteile einer wässrigen Styrol-Butadien-Kautschuk-Emulsion gegeben (ein Gewichtsteil SBR und ein Gewichtsteil Wasser). Die entstehende Mischung wurde für weitere 10 Minuten bei 90 °C gerührt.

Zur Herstellung eines erfindungsgemäßen Elektroden-Festelektrolyt-Verbunds wurde die so erhaltene Mischung anschließend auf die gemäß obiger Vorschrift alkalisierte Luftkathode aufgetragen. Der entstehende Verbund wurde getrocknet.

Schematisch wird das erfindungsgemäße Verfahren anhand der Skizzen 1A bis 1 E erläutert.

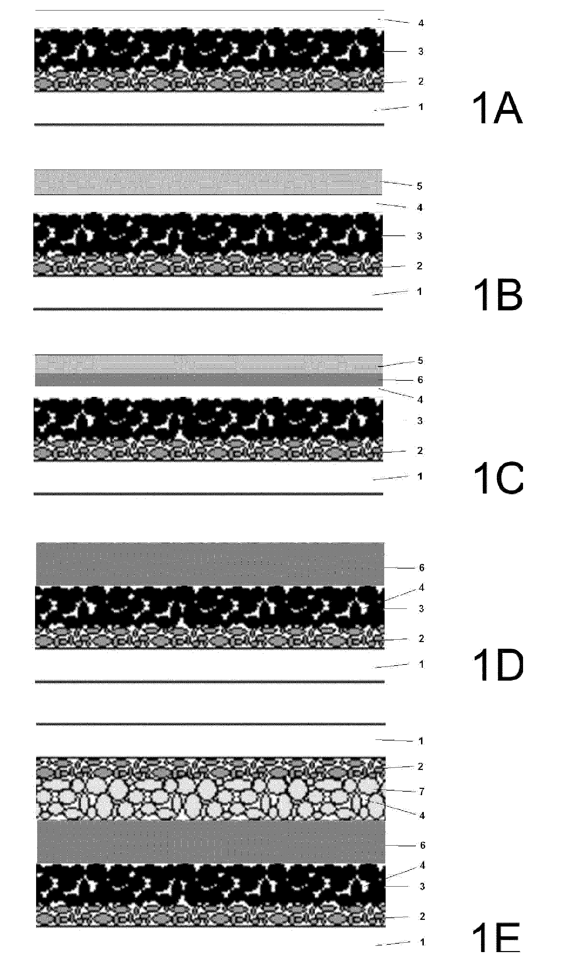

In Fig. 1A ist eine Batterieelektrode dargestellt umfassend einen Träger 1, eine darauf aufgebrachte metallische Stromableiterschicht 2 sowie eine Elektrode 3. Auf die Elektrode 3 wurde eine Schicht 4 aufgetragen. Die dabei zum Einsatz kommende Zusammensetzung enthielt neben einer Alkaliverbindung und einem geringen Anteil an PVA einen relativ hohen Anteil an Wasser und konnte problemlos in Poren der Schicht 3 eindringen.

Auf 4 wurde anschließend eine Zusammensetzung gedruckt, die ebenfalls PVA enthielt, allerdings in einer sehr viel höheren Konzentration. Das Ergebnis hiervon, Schicht 5, ist in Fig. 1 B dargestellt.

Nach dem Auftrag der Schicht 5 kommt es in der Regel zu einem Vernetzungsprozess, in dessen Folge die aufgetragene Schicht fest wird. Hierbei bildet sich zunächst eine Grenzschicht 6 mit einer gummiartigen Konsistenz als Trennschicht zwischen den Schichten 4 und 5. Meist schreitet dieser Prozess weiter fort, bis der Vernetzungsprozess innerhalb der Schichten 4 und 5 abgeschlossen ist.

In Fig. 1E ist eine Ausführungsform dargestellt, bei der der Verbund aus Fig. 1E mit einem Verbund aus einer Gegenelektrode 7 und einem Ableiter 8 kombiniert wurde, beispielsweise durch Lamination. Ein solcher Gesamtverbund ist durch Lamination ohne Probleme herstellbar, da die Schicht 6 bei Erwärmung schnell erweicht oder sogar flüssig wird.

## Patentansprüche

1. Verfahren zur Herstellung eines Elektroden-Festelektrolyt-Verbundes, umfassend die Schritte
- Bereitstellung einer Elektrode und
- Bildung einer Festelektrolyt-Schicht auf einer Oberfläche der Elektrode,
wobei zur Bildung der Festelektrolyt-Schicht
- eine alkalische Lösung auf die Oberfläche aufgebracht wird und
- auf die alkalisierte Oberfläche eine Zusammensetzung aufgebracht wird, die mindestens ein Polymer umfasst, das hydrolisierbare Gruppen aufweist und dessen Fähigkeit zur Ausbildung eines dreidimensionalen, hochviskosen Netzwerks bei einer mindestens teilweisen Hydrolyse dieser Gruppen ansteigt,
wobei
- es sich bei dem mindestens einen Polymer um ein Mitglied aus der Gruppe mit Polyvinylalkohol (PVA), Ethylen-Vinylalkohol-Copolymer (EVA), Polyvinylpyrrolidon (PVP), Polyacrylat (PA), Polyacrylnitril (PAN) und Mischungen aus diesen handelt,
**dadurch gekennzeichnet, dass**
- die Zusammensetzung das mindestens eine Polymer in einem Anteil zwischen 5 Gew.-% und 30 Gew.-%,sowie ein Lösungs- oder Dispergiermittel enthält und
- die alkalische Lösung das mindestens eine Polymer in einem Anteil zwischen 0,1 Gew.-% und 5 Gew.-% sowie ein Lösungs- oder Dispergiermittel und mindestens eine Alkaliverbindung enthält.

2. Verfahren nach Anspruch 1, **dadurch gekennzeichnet, dass** der Auftrag der alkalischen Lösung und/oder des mindestens einen Polymers mittels einer Druckvorrichtung erfolgt.

3. Verfahren nach einem der Ansprüche 1 oder 2, **dadurch gekennzeichnet, dass** der Auftrag der alkalischen Lösung und/oder des mindestens einen Polymers bei Raumtemperatur erfolgt.

## Claims

1. Process for producing an electrode-solid electrolyte composite, which comprises the steps
- provision of an electrode and
- formation of a solid electrolyte layer on a surface of the electrode,
where, to form the solid electrolyte layer,
- an alkaline solution is applied to the surface and
- a composition comprising at least one polymer which has hydrolyzable groups and whose ability to form a three-dimensional, high-viscosity network increases on at least partial hydrolysis of these groups is applied to the alkalized surface,
where
- the at least one polymer is a member of the group consisting of polyvinyl alcohol (PVA), ethylene-vinyl alcohol copolymer (EVA), polyvinylpyrrolidone (PVP) polyacrylate (PA), polyacrylonitrile (PAN) and mixtures thereof, **characterized in that**
- the composition contains the at least one polymer in a proportion in the range from 5% by weight to 30% by weight and also a solvent or dispersion medium and
- the alkaline solution contains the at least one polymer in a proportion in the range from 0.1% by weight to 5% by weight and also a solvent or dispersion medium and at least one alkali compound.

2. Process according to Claim 1, **characterized in that** the application of the alkaline solution and/or of the at least one polymer is carried out by means of a pressure device.

3. Process according to either Claim 1 or 2, **characterized in that** the application of the alkaline solution and/or the at least one polymer is carried out at room temperature.

## Revendications

1. Procédé pour la fabrication d'un composite électrode-électrolyte solide, comprenant les étapes
- disposition d'une électrode et
- formation d'une couche d'électrolyte solide sur une surface de l'électrode,
dans lequel, pour la formation de la couche d'électrolyte solide
- on applique sur la surface une solution alcaline et
- on applique sur la surface alcalinisée une composition qui comprend au moins un polymère qui comporte des groupes hydrolysables et dont l'aptitude à la formation d'un réseau tridimensionnel, à haute viscosité, augmente avec une hydrolyse au moins partielle de ces groupes,
dans lequel
- pour ce qui est dudit au moins un polymère il s'agit d'un membre du groupe constitué par le poly(alcool vinylique) (PVA), un copolymère éthylène-alcool vinylique (EVA), la polyvinylpyrrolidone (PVP), le polyacrylate (PA), le polyacrylonitrile (PAN) et des mélanges de ceux-ci,
**caractérisé en ce que**
- la composition contient ledit au moins un polymère en une proportion comprise entre 5 % en poids et 30 % en poids ainsi qu'un solvant ou dispersant et
- la solution alcaline contient ledit au moins un polymère en une proportion comprise entre 0,1 % en poids et 5 % en poids ainsi qu'un solvant ou dispersant et au moins un composé alcalin.

2. Procédé selon la revendication 1, **caractérisé en ce que** l'application de la solution alcaline et/ou dudit au moins un polymère s'effectue au moyen d'un dispositif d'impression.

3. Procédé selon l'une quelconque des revendications 1 et 2, **caractérisé en ce que** l'application de la solution alcaline et/ou dudit au moins un polymère s'effectue à la température ambiante.
